# EUROPEAN PATENT SPECIFICATION

(11) **EP 3 222 915 B1**
(45) Date of publication and mention of the grant of the patent: **20.01.2021**
(21) Application number: 17162935.5
(22) Date of filing: 24.03.2017
(51) Int. Cl.: F23N 5/08, F23R 3/34, F23R 3/28

(54) **A GAS-TURBINE PLANT PROVIDED WITH THERMOACOUSTIC INSTABILITY DETECTION AND METHOD OF CONTROLLING A GAS-TURBINE PLANT**
GASTURBINENANLAGE MIT THERMOAKUSTISCHER INSTABILITÄTSERKENNUNG UND VERFAHREN ZUR STEUERUNG EINER GASTURBINENANLAGE
INSTALLATION DE TURBINE À GAZ AVEC DÉTECTION D'INSTABILITÉ THERMOACOUSTIQUE ET PROCÉDÉ DE COMMANDE D'UNE INSTALLATION DE TURBINE À GAZ

(30) Priority: 25.03.2016 IT UA20162044
(43) Date of publication of application: 27.09.2017
(73) Proprietor: Ansaldo Energia S.p.A., 16152 Genova (IT)
(72) Inventor: Gottardo, Enrico, 16018 Mignanego (IT); Bertolotto, Edoardo, 16152 Genova (IT); Ozzano, Claudia, 16149 Genova (IT)
(74) Representative: Bernotti, Andrea

(56) References cited:
- EP-A1- 0 918 152
- EP-A1- 1 593 910
- EP-A1- 2 887 036
- WO-A1-2013/061303
- WO-A2-99/30006
- US-A- 5 544 478
- US-A1- 2005 016 181
- US-A1- 2010 173 253

## Description

The present invention relates to a gas-turbine plant provided with thermoacoustic instability detection and a method of controlling a gas-turbine plant.

As is known, controlling a gas-turbine of a plant for the production of electricity presents particularly complex aspects in terms of both performance and respect for regulations as regards the safeguarding of the environment, and with reference to the need to preserve the machine and its components in an efficient state to avoid the premature deterioration and, above all, potentially disastrous malfunctioning.

For example, proper control of the combustion conditions is crucial for maintaining a high level of efficiency and, at the same time, keeping polluting emissions within the limits set by law, which are becoming increasingly stringent. Bad combustion conditions can also seriously damage the structure of the machine. In fact, certain conditions of instability may cause vibrations of the combustion chamber ("humming") that may be stressed near a resonance frequency. An event of this type can be particularly dangerous to the internal thermal insulating coating of the combustion chamber, which is normally composed of adjoining ceramic tiles. The vibrations of the combustion chamber may easily damage the thermal insulating coating, which requires more frequent maintenance than is desirable. Furthermore, despite constant maintenance, the thermal insulating coating can lose efficiency and no longer be able to offer adequate protection for the metal case of the combustion chamber, where serious and even irreversible damage may occur.

Other critical events, such as excessive levels of polluting emissions may not be dangerous for the machine in themselves, but they should nonetheless be avoided to comply with the legal constraints and because the machine's efficiency is significantly reduced.

The problem of thermoacoustic fluctuations is made even more critical by the operating flexibility that the energy market needs, particularly in the last few years. In fact, to follow the cyclical variations of the demand and contribute to the stability of the distribution networks, plants for producing electricity must be able to operate in very different load conditions and respond with rapid load variations, which are, as a rule, principally entrusted to gas turbines. However, rapid load variations may lead to conditions of thermoacoustic instability.

Therefore, it is essential to have equipment that can record the onset of thermoacoustic fluctuations accurately and in good time, in order to be able to adopt the necessary countermeasures.

At present, thermoacoustic fluctuations are measured using piezoelectric-type sensors, which may be coupled directly to the combustion chamber or with pipes and pressure plugs, or be mounted in the plenum. The piezoelectric sensors substantially record pressure variations, regardless of where they originate. During the normal working of a gas turbine, however, the combustion chamber is the centre of various kinds of pressure fluctuations. For example, the normal vertical movement of the fluid passing through the machine causes pressure fluctuations, which, however, do not pose a threat. Consequently, just the piezoelectric sensors alone do not make it possible to identify pressure fluctuations, which are coupled to temperature fluctuations, in other words pressure fluctuations which are potentially harmful, but which can be effectively contrasted using appropriate controls. Consequently, it isn't possible also to identify the onset of thermoacoustic instability accurately and in good time, when the pressure fluctuations pressure and the heat release fluctuations are closely linked.

It is evident that the controls are also affected and may not be as effective as desired.

EP 1 503 910 A1 discloses a gas-turbine plant, comprising a gas-turbine unit and a control system. The gas-turbine unit comprises a combustion chamber. The control system comprises a monitoring apparatus, which is provided with at least one optical probe and detects light intensity fluctuations inside the combustion chamber with the optical probe, and a controller, configured to control the gas-turbine unit according to a response of the monitoring apparatus. The monitoring apparatus converts light intensity signals into optical monitoring signals and the controller supplies control signals for the gas-turbine unit according to the optical monitoring signals supplied by the monitoring apparatus. The controller comprises a processing module, configured to detect conditions of thermoacoustic instability inside the combustion chamber based on the optical monitoring signals.

A gas turbine plant having a control system, comprising a monitoring apparatus provided with at least one optical probe, and configured to detect light intensity fluctuations inside the combustion chamber with the optical probe is also known from US 5 544 478 A. US 5 544 478 A discloses the preamble of claims 1 and 15.

Other examples of known gas-turbine plants are disclosed in WO 99/30006 A2, in US 2005/016181 A1, in EP 0 918 152 A1, in US 2010/173253 A1 and in WO 2013/061303 A1.

The aim of the present invention is thus to provide a gas-turbine plant and a method of controlling a gas-turbine plant that allow the described limitations to be overcome or at least reduced.

According to the present invention, a gas-turbine plant is provided, as well as a method of controlling a gas-turbine plant, as defined in claims 1 and 15 respectively.

The present invention will now be described with reference to the accompanying drawings, which illustrate a not limiting embodiment thereof, wherein:
- Figure 1 is a simplified block diagram of a gas turbine for producing electricity according to one embodiment of the present invention;
- Figure 2 shows a more detailed diagram of a part of the plant in Figure 1;

- Figure 3 illustrates a graph that shows the sizes relating to the plant in Figure 1;
- Figure 4 shows a transversal section through a component of the plant in Figure 1;
- Figure 5 shows an enlarged detail of the component in Figure 4;
- Figure 6 shows an enlarged detail of the component in figure 4 in a different embodiment of the present invention.

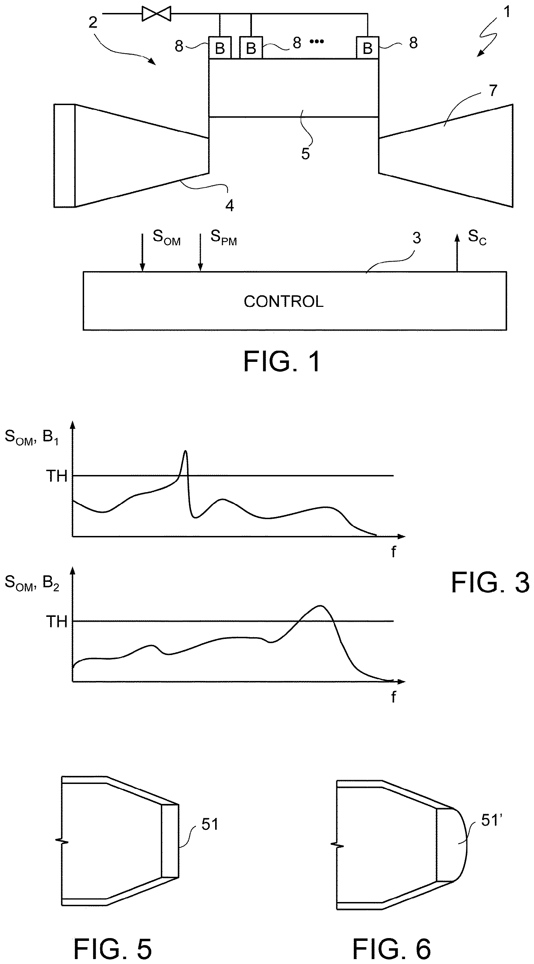

With reference to Figure 1, number 1 defines a gas-turbine plant as a whole comprising a gas-turbine unit 2 and a control system 3.

The gas-turbine unit 2, in turn, comprises a compressor 4, a combustion chamber 5 and an expansion section or turbine 7.

The axial-type compressor 4 feeds the combustion chamber 5 with a flow of air drawn from outside.

The combustion chamber 5, for example of a toroidal type, is provided with a plurality of burner assemblies 8, which cause the combustion inside the combustion chamber 5, of a mixture of air and fuel. The fuel can be gaseous, for example natural gas or syngas, or liquid, for example gasoil. The gas-turbine unit 2 can be structured to use different types of fuel, both gaseous and liquid.

The turbine 7 receives and expands the flow of combustion gases from the combustion chamber 5 to extract mechanical work, which is transferred to an external user, typically an electric generator, which is not shown here.

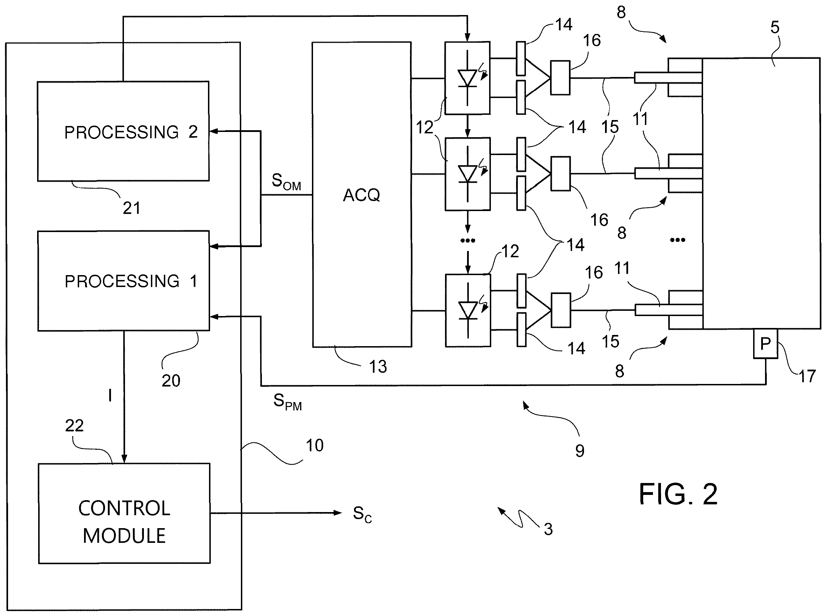

With reference to Figure 2, the control system 3 comprises a monitoring apparatus 9 and a controller 10.

The monitoring apparatus 9 is configured to monitor thermoacoustic fluctuations inside the combustion chamber 5 and, in particular, to detect light intensity fluctuations in a flame area of the combustion chamber 5.

In one embodiment, the monitoring apparatus 9 comprises a plurality of optical probes 11, optoelectronic transducers 12, an acquisition unit 13, optical filters 14 and waveguides 15, for optically coupling the optical probes 11 to respective optoelectronic transducers 12.

The optical probes 11 are arranged facing inside the combustion chamber 5, so that the flame area of a respective burner assembly 8 is visible. In one embodiment, the optical probes 11 are built into the structure of the respective burner assembly 8, as described later on in further detail.

The light radiation gathered by the optical probes 11 is carried towards the optoelectronic transducers 12 by the respective waveguides 15, which, in one embodiment, can be beams of optical fibres.

The optoelectronic transducers 12 can include photodetectors, like photodiodes, phototransistors or photomultipliers, organized into image sensors, where appropriate. Each optoelectronic transducer 12 converts signals of light intensity received by the respective waveguides 15 into electrical signals, which are collected by the acquisition unit 13. In turn, the acquisition unit 13 provides the controller 10 with optical monitoring signals S_{OM} obtained from the electrical signals from the optoelectronic transducers 12.

In one embodiment, the optical filters 14 are arranged along an optical path between the optical probes and the optoelectronic transducers 12, for example between the waveguides 15 and the respective optoelectronic transducers 12. In this case, the optical filters 14 and the respective associated optoelectronic transducers 12 define separate channels that carry signals relating to respective wavelength bands (the signals are natively optical signals subsequently converted into electrical signals). Alternatively, the optical filters can be arranged along the waveguides 15. In this case, it is possible to use different portions of waveguides downstream of optical filters 14 to make different channels. Furthermore, it is possible to convert the light intensity signals of the different channels with special optoelectronic transducers 12 or with the same optoelectronic transducers 12, for example with time division. In one embodiment, beam splitters 16 can be used to divide the beam in the channels, directing portions of beam towards the respective optical filters 14.

The optical filters 14 have passbands centred around respective wavelengths associated with lines characteristic of the spectrum of emission of radicals OH, CH, which are intermediate products of the combustion reaction, with a diffusion and premixed flame respectively. In particular, passbands B₁, B₂ of the optical filters 14 can be centred around the wavelengths of 308 nm and 430 nm respectively. The passbands B₁, B₂ can have for example a width of 10 nm and 10 nm respectively and, in one embodiment, they are separate and not overlapping.

In a different embodiment, which is not shown, there are no optical filters and the conversion of the intensity signals into electrical signals is carried out over the whole spectrum. In further embodiments, there can be optical filters that select the infrared and/or visible band, for example for pyrometry applications or for identifying characteristics of extension and symmetry of the flame area of the burners.

The monitoring apparatus 9 also comprises piezoelectric transducers 17 that are configured to provide pressure monitoring signals S_{PM} indicative of the pressure inside the combustion chamber 5. The piezoelectric transducers 17 can be fluidly coupled to the inside of the combustion chamber 5 with pipes (not illustrated) or they can be housed in a plenum (also not shown) of the combustion chamber 5.

The controller 10 receives measurements of operating values from sensors on the gas-turbine unit 2 or coupled to it and the optical monitoring signals S_{OM} and pressure monitoring signals S_{PM} from the monitoring apparatus 9 (from the acquisition unit 13 and from the piezoelectric transducers 17 respectively). The controller 10 is configured to determine control signals S_{C} according to measurements of the operating values received and set points calculated or supplied from the outside. In particular, the controller 10 is configured to determine the control signals S_{C} according to the optical monitoring signals S_{OM}. The optical monitoring signals S_{OM} can be used on their own or, where appropriate, in conjunction with the pressure monitoring signals S_{PM}, which will be explained later on.

The control signals S_{C} are used to determine the operating conditions of the gas-turbine unit by actuator assemblies, which are not shown here in detail (for example, the control signals S_{C} can determine the degree of opening of the Inlet Guide Vanes, IGV, of the first compressor stage and regulating valves of the flow of fuel supplied to the burner assembly 8).

In one embodiment, the controller 10 comprises a first processing module 20, a second processing module 21 and a control module 22.

The first processing module 20 is configured to detect conditions of thermoacoustic instability inside the combustion chamber 5 based on the optical monitoring signals S_{OM} received from the acquisition unit 13.

According to the invention, the first processing module 20 also uses the pressure monitoring signals S_{PM} provided by the piezoelectric transducers 17 to identify correlations between light intensity fluctuations and pressure fluctuations with the aim of improving the identification of conditions of thermoacoustic instability and their criticality.

The second processing module 21 uses the optical monitoring signals S_{OM} to regulate operating parameters (for example gain parameters) for the acquisition unit 13.

The control module 22 is configured to determine the control signals S_{C} for the actuator assemblies according to the measurements of the operating values received, including, in particular, the optical monitoring signals S_{OM} and the pressure monitoring signals S_{PM}.

More specifically, the first processing module 20 calculates the spectrum of the optical monitoring signals S_{OM} with Fourier's transform and monitors the content in frequency. For example, the first processing module 20 identifies any spectral components of amplitude greater than a threshold (TH in Figure 3) and provides the control module 22 with monitoring information I. The threshold may be determined according to the wavelength.

The presence of a spectral component with an amplitude greater than the threshold is indicative of a fluctuation related to heat release and consequently of a condition of potentially harmful instability.

In one embodiment, the first processing module 20 processes the optical monitoring signals S_{OM} of the channels associated with passbands B₁, B₂ of the optical filters 14 separately. In this way, it is possible to identify the origin of the incipient or manifested instability.

According to the invention, the first processing module 20 identifies correlations between spectral components of the optical monitoring signals S_{OM} and the pressure monitoring signals S_{PM}. Basically, the first processing module 20 calculates the spectrum of the pressure monitoring signals S_{PM} and identifies any components greater than a threshold. The spectral components of the pressure monitoring signals S_{PM} are indicative of pressure fluctuations inside the combustion chamber 5. As discussed previously, the pressure fluctuations can be linked to the normal operation of the machine and are not always harmful. However, the presence of spectral components substantially of the same frequency in the optical monitoring signals S_{OM} and in the pressure monitoring signals S_{PM} indicates a high probability of a condition of thermoacoustic instability, wherein the heat release fluctuations and the pressure fluctuations strengthen each other. Phenomena of thermoacoustic instability should be avoided in general and must be contrasted with appropriate control action, which the control module 22 is configured to select on the basis of the monitoring information I provided by the first processing module 20.

The monitoring information I can be defined in the form of electric signals or messages containing, for example:
the frequencies and amplitudes of the spectral components of the optical monitoring signals S_{OM} identified;
the frequencies of the spectral components of the optical monitoring signals S_{OM} and the mutually correlated pressure monitoring signals;
where appropriate, a parameter indicative of the dangerousness of the fluctuations detected (the indicative parameter can be determined empirically on the basis of a case study and corrected according to the amplitudes of the fluctuations detected and the coupling between heat release fluctuations and pressure fluctuations).

The control module 22 is configured to determine the control signals S_{C} on the basis of detected plant quantities or indirectly through sensors, which are not shown, and on the basis of the monitoring information I provided by the first processing module 20. The control module 22 uses the control signals S_{C} to determine the operating state of the gas-turbine unit 2. Furthermore, the control module 22 uses the monitoring information I to carry out checks aimed at modifying the operating state to avoid the conditions that give rise to thermoacoustic fluctuations. The control action may affect indirectly the selection, for example, of load set-points or exhaust gases temperature set-points or directly the actuator assemblies 18 (in particular, the degree of opening of the IGV of the first compressor stage and the fuel flow supplied to the burner assembly 8 by the regulating valves).

For example, the control module 22 may be configured to determine control actions based on a ratio of radicals OH, CH as determined from the optical monitoring signals S_{OM}. In one embodiment, once thermoacoustic oscillation have been detected, based either on optical monitoring signals S_{OM} alone or on correlations between optical monitoring signals S_{OM} and pressure monitoring signals S_{PM}, the control module 22 determines a premix degree and an air-to-fuel ratio of the mixture supplied to the combustion chamber 5 for burning. If the control module 22 determines ratio of radicals OH, CH that the mixture is too lean (e.g. air-to-fuel ratio above a threshold), through a first set of control signals S_{C} the control module 22 requests that the balance of pilot (diffusion or partially premixed) flame and premixed flame (see also below) is modified without affecting the overall power delivery (namely, power associated with premixed flame is increased and power associated with pilot flame is reduced). Instead, if the air-to-fuel ratio lies within an acceptable range, the control module 22, through a second set of control signals S_{C}, the control module 22 causes the overall load and power delivery to be reduced, while not necessarily affecting the balance of pilot (diffusion or partially premixed) flame and premixed flame.

Optical detection of variations in light intensity associated with flame fluctuations make it advantageously possible to detect conditions of thermoacoustic instability accurately and in good time. This result cannot be obtained with piezoelectric transducers alone, which are unable to distinguish vibrations caused by thermoacoustic instability (potentially harmful) from pressure variations linked to the normal working of the machine. The combined use of optical monitoring and piezoelectric transducers offers better identification of conditions of thermoacoustic instability, correlating light intensity fluctuations and pressure fluctuations.

Furthermore, monitoring wavelength bands associated with lines characteristic of the spectrum of emission of the radicals OH, CH also makes it possible to identify whether the thermoacoustic fluctuations are caused by a diffusion flame (pilot) or premixed flame.

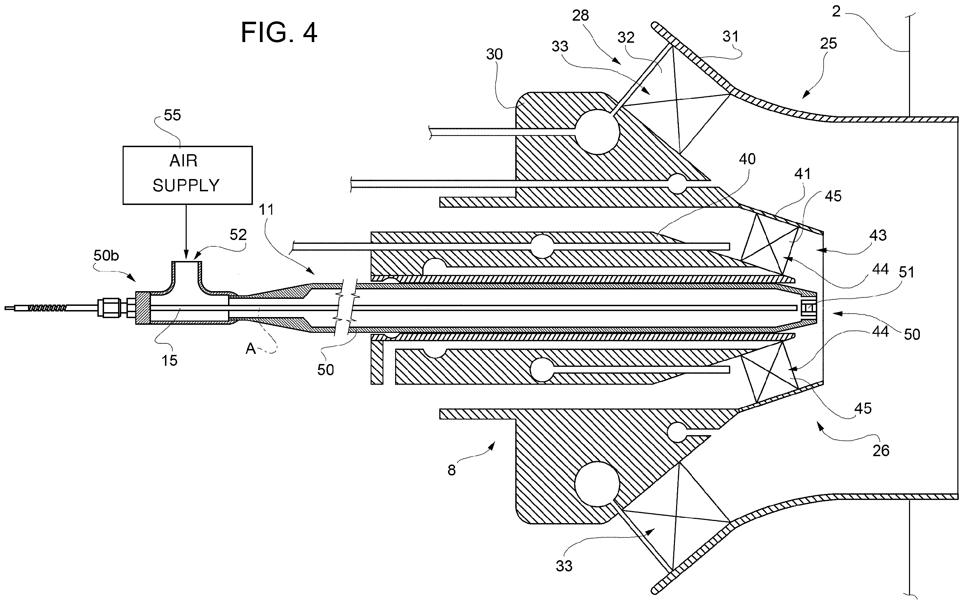

With reference to Figure 4, according to one embodiment, at least one burner assembly 8 is equipped with an optical probe 11. More specifically, the burner assembly 8 extends along an axis A, around which a main burner 25 is arranged on the outside and, centrally, a pilot burner 26. The optical probe 11 is inserted inside the pilot burner 26, again along axis A.

The premixing-type main burner 25 is arranged around the pilot burner 26 and provided with a swirler, which is indicated by number 28.

The swirler 28 is defined radially between a first frusto-conical body 30 and a substantially frusto-conical annular wall 31. The first frusto-conical body 30 presents a cylindrical axial cavity and it is also frusto-conical towards the outside. The swirler 28 also comprises a plurality of vanes 32, defining respective flow channels 33 to channel a flow of combustion air diagonally to the axis A, towards the combustion chamber 5.

The swirler 28 mixes the flow of fuel and air, which forms in the flow channels 33, with a greater quantity of air in relation to the theoretical stoichiometric ratio, to generate a premixing flame in excess of air.

The pilot burner 26 comprises a second frusto-conical body 40 and a third frusto-conical body 41 and an axial-type swirler 43 is defined between them. The second frusto-conical body 40 extends around axis A and presents a passing axial cavity, where the optical probe 11 is housed. The third frusto-conical body 41, which is hollow, is arranged around the second frusto-conical body 40, and it is coaxial to it and connected to the outer frusto-conical surface of the first frusto-conical body 30.

The swirler 43 comprises a plurality of vanes 45, which are arranged in the space between the second frusto-conical body 40 and the third frusto-conical body 41. Flow channels 44 are defined between pairs of adjacent vanes 45.

As stated previously, the optical probe 11 is housed along axis A, inside the second frusto-conical body 40 and comprises a tubular body 50. A first end 50a of the tubular body 50 is facing the combustion chamber 5, adjacent to the outlet of the pilot burner 26, and can be provided with an optical window 51 defined by a sheet with parallel flat faces (detail in Figure 5) or a focusing lens (detail in Figure 6, where the optical window is indicated with 51'). The focusing lens can be a flat-convex lens, which broadens the vision angle of the optical probe 11 inside the combustion chamber 5. The optical window 51 is transparent at least in the bands B₁, B₂ of the optical filters 14 and, in one embodiment, it is transparent in a band of wavelengths from the infrared range to the ultraviolet range. The optical window 51 provides optical access to the flame area of both the main burner 25 and the pilot burner 26 and, at the same time, it protects the inside of the optical probe 11 both limiting exposure to high temperatures and preventing any return of hot gas. In one embodiment, the optical window 51 is made of sapphire or quartz.

An air intake 52, made on a second end 50b of the tubular body 50, opposite the first end 50a, is configured to feed a flow of cooling air inside the tubular body 50. The air intake 52 can be in communication with an air supply system 55 (only shown schematically here), which feeds combustion air to the burner assembly 8 of the gas-turbine unit. The cooling air can be made to flow both inside and outside the cylindrical body 30.

The optical probe 11 also comprises a portion of one of the waveguides 15, which is housed inside the tubular body 50 through the second end and extends to the optical window 51. The waveguide 15 is, therefore, optically facing the flame area both of the main burner 25 and the pilot burner 26.

At least the portion of the waveguide 15 housed inside the tubular body 50 is of a type resistant to high temperatures (for example up to 500°C).

Integrating the optical probe 11 in the burner assembly 8 is advantageous for a number of reasons. Firstly, the optical probe 11 is near the flame area and consequently the light radiation emitted during combustion (including bands B₁, B₂ and the spectrum from the infrared range to the ultraviolet range in general) is collected efficiently and with an elevated signal/noise ratio. Furthermore, it is not necessary to make special openings in the case of the combustion chamber 5, which is beneficial to both facilitating assembly and maintenance, and the structural resistance of the combustion chamber 5 itself.

Finally, variations and modifications can obviously be made to the apparatus, plant, burner assembly and to the method described, without going beyond the scope of the present invention, as defined in the accompanying claims.

## Claims

1. A gas-turbine plant, comprising a gas-turbine unit (2) and a control system (3), wherein:
the gas-turbine unit (2) comprises a combustion chamber (5); and
the control system (3) comprises monitoring apparatus (9), provided with at least one optical probe (11) and configured to detect light intensity fluctuations inside the combustion chamber (5) with the optical probe (11), and a controller (10), configured to control the gas-turbine unit (2) according to a response of the monitoring apparatus (9);
wherein the monitoring apparatus (9) is configured to convert light intensity signals into optical monitoring signals (S_{OM}) and the controller (10) is configured to supply control signals (S_{C}) for the gas-turbine unit (2) according to the optical monitoring signals (S_{OM}) supplied by the monitoring apparatus (9);
wherein the controller (10) comprises a processing module (20), configured to detect conditions of thermoacoustic instability inside the combustion chamber (5) based on the optical monitoring signals (S_{OM});
wherein the monitoring apparatus (9) comprises piezoelectric transducers (17), fluidly coupled to the inside of the combustion chamber (5) and configured to provide pressure monitoring signals (S_{PM}) indicative of pressure inside the combustion chamber (5);
and wherein the processing module (20) is configured to identify correlations between light intensity fluctuations detected by the optical probe (11) and pressure fluctuations detected by the piezoelectric transducers (17);
**characterized in that** the controller (10) is configured to supply the control signals (S_{C}) for the gas-turbine unit (2) according to the pressure monitoring signals (SPM) and to detect conditions of thermoacoustic instability inside the combustion chamber (5) according to the correlations between the detected light intensity fluctuations and pressure fluctuations.

2. The plant according to claim 1, wherein the monitoring apparatus (9) is configured to detect light intensity fluctuations selectively in a first band (B₁), including the wavelength of 308 nm, and in a second band (B₂), including the wavelength of 430 nm.

3. The plant according to claim 2, wherein the first band (B₁) and the second band (B₂) are separate.

4. The plant according to claim 1, wherein the monitoring apparatus (9) is configured to detect light intensity fluctuations in a wavelength spectrum extending from the infrared range to the ultraviolet range.

5. The plant according to any one of the claims from 2 to 4, wherein the monitoring apparatus (9) comprises optoelectronic transducers (12) and waveguides (15) for optically coupling the optical probe (11) to the optoelectronic transducers (12).

6. The plant according to claim 5, wherein the monitoring apparatus (9) comprises optical filters (14) arranged along an optical path, between the optical probe (11) and the optoelectronic transducers (12) and having respective passbands coinciding with the first band (B₁) and with the second band (B₂).

7. The plant according to claim 6, wherein the optical filters (14) and the respective associated optoelectronic transducers (12) define separate channels that convey signals relating to respective wavelength bands.

8. The plant according to any one of the preceding claims, wherein the processing module (20) is configured to calculate a spectrum of the optical monitoring signals (S_{OM}) and detect spectral components of amplitude greater than a threshold (TH).

9. The plant according to any one of the preceding claims, wherein the gas-turbine unit (2) comprises at least one burner assembly (8) and the optical probe (11) is housed inside the burner assembly (8).

10. The plant according to claim 9, wherein the burner assembly (8) extends along an axis (A) and the optical probe (11) is arranged along the axis (A).

11. The plant according to claim 9 or 10, wherein the burner assembly (8) comprises a main burner (25) and a pilot burner (26) arranged inside the main burner (25), coaxial to it, and wherein the optical probe (11) is housed inside the pilot burner (25) and is coaxial to the main burner (25) and to the pilot burner (26).

12. The plant according to any of the preceding claims, wherein the optical probe (11) comprises a tubular body (50), having an optical window (51) at a first end (50a), and a portion of waveguide (15) housed inside the tubular body (50) between a second end (50b) of the tubular body (50) and the optical window (51).

13. The plant according to claim 12, wherein the optical window is facing inside the combustion chamber (5).

14. The plant according to claim 12 or 13, wherein the tubular body (50) comprises an air intake ((52) in communication with an air supply system (55) of the burner assembly (8).

15. A method of controlling a gas-turbine plant comprising a gas-turbine unit (2), the method comprising:
detecting light intensity fluctuations inside a combustion chamber (5) ;
detecting pressure fluctuations inside the combustion chamber (5); identifying correlations between the detected light intensity fluctuations and the detected pressure fluctuations; and
controlling the gas-turbine unit (2) according to the detected light intensity fluctuations;
**characterized in that** detecting conditions of thermoacoustic instability comprises recognising conditions of thermoacoustic instability inside the combustion chamber (5) according to the detected correlations between light intensity fluctuations and pressure fluctuations.

16. The method according to claim 15, wherein the light intensity fluctuations are detected selectively in a first band (B₁), including the wavelength of 308 nm, and in a second band (B₂), including the wavelength of 430 nm.

## Patentansprüche

1. Gasturbinenanlage, die eine Gasturbineneinheit (2) und ein Steuersystem (3) umfasst, wobei:
die Gasturbineneinheit (2) eine Brennkammer (5) umfasst; und
das Steuersystem (3) eine Beobachtungsvorrichtung (9), die mit wenigstens einer optischen Sonde (11) versehen ist und dafür konfiguriert ist, Lichtintensitätsschwankungen innerhalb der Brennkammer (5) mittels der optischen Sonde (11) zu erfassen, und eine Steuervorrichtung (10) umfasst, die dafür konfiguriert ist, die Gasturbineneinheit (2) entsprechend einer Reaktion der Beobachtungsvorrichtung (9) zu steuern;
wobei die Beobachtungsvorrichtung (9) dafür konfiguriert ist, Lichtintensitätssignale in optische Beobachtungssignale (S_{OM}) umzuwandeln, und die Steuervorrichtung (10) dafür konfiguriert ist, Steuersignale (Sc) für die Gasturbineneinheit (2) entsprechend den von der Beobachtungsvorrichtung (9) gelieferten optischen Beobachtungssignalen (S_{OM}) zu liefern;
wobei die Steuervorrichtung (10) ein Verarbeitungsmodul (20) umfasst, das dafür konfiguriert ist, Zustände thermoakustischer Instabilität innerhalb der Brennkammer (5) auf der Grundlage der optischen Beobachtungssignale (S_{OM}) zu erfassen;
wobei die Beobachtungsvorrichtung (9) piezoelektrische Wandler (17) umfasst, die fluidmäßig mit dem Inneren der Brennkammer (5) gekoppelt sind und dafür konfiguriert sind, Druckbeobachtungssignale (S_{PM}) bereitzustellen, die auf den Druck innerhalb der Brennkammer (5) schließen lassen;
und wobei das Verarbeitungsmodul (20) dafür konfiguriert ist, Korrelationen zwischen den von der optischen Sonde (11) erfassten Lichtintensitätsschwankungen und den von den piezoelektrischen Wandlern (17) erfassten Druckschwankungen zu identifizieren;
**dadurch gekennzeichnet, dass** die Steuervorrichtung (10) dafür konfiguriert ist, die Steuersignale (Sc) für die Gasturbineneinheit (2) entsprechend den Druckbeobachtungssignalen (S_{PM}) zu liefern und Zustände thermoakustischer Instabilität innerhalb der Brennkammer (5) entsprechend den Korrelationen zwischen den erfassten Lichtintensitätsschwankungen und Druckschwankungen zu erfassen.

2. Anlage nach Anspruch 1, wobei die Beobachtungsvorrichtung (9) dafür konfiguriert ist, Lichtintensitätsschwankungen selektiv in einem ersten Band (B₁), das die Wellenlänge von 308 nm enthält, und in einem zweiten Band (B₂), das die Wellenlänge von 430 nm enthält, zu erfassen.

3. Anlage nach Anspruch 2, wobei das erste Band (B₁) und das zweite Band (B₂) getrennt sind.

4. Anlage nach Anspruch 1, wobei die Beobachtungsvorrichtung (9) dafür konfiguriert ist, Lichtintensitätsschwankungen in einem Wellenlängenspektrum zu erfassen, das sich vom Infrarotbereich bis zum Ultraviolettbereich erstreckt.

5. Anlage nach einem der Ansprüche 2 bis 4, wobei die Beobachtungsvorrichtung (9) optoelektronische Wandler (12) und Wellenleiter (15) zur optischen Kopplung der optischen Sonde (11) mit den optoelektronischen Wandlern (12) umfasst.

6. Anlage nach Anspruch 5, wobei die Beobachtungsvorrichtung (9) optische Filter (14) umfasst, die entlang eines optischen Pfades zwischen der optischen Sonde (11) und den optoelektronischen Wandlern (12) angeordnet sind und jeweils Durchlassbänder aufweisen, die mit dem ersten Band (B₁) und mit dem zweiten Band (B₂) zusammenfallen.

7. Anlage nach Anspruch 6, wobei die optischen Filter (14) und die jeweils zugehörigen optoelektronischen Wandler (12) separate Kanäle definieren, die Signale übertragen, die sich auf die jeweiligen Wellenlängenbänder beziehen.

8. Anlage nach einem der vorangehenden Ansprüche, wobei das Verarbeitungsmodul (20) dafür konfiguriert ist, ein Spektrum der optischen Beobachtungssignale (S_{OM}) zu berechnen und Spektralkomponenten mit einer Amplitude größer als ein Schwellenwert (TH) zu erfassen.

9. Anlage nach einem der vorangehenden Ansprüche, wobei die Gasturbineneinheit (2) wenigstens eine Brenneranordnung (8) umfasst und die optische Sonde (11) im Inneren der Brenneranordnung (8) untergebracht ist.

10. Anlage nach Anspruch 9, wobei sich die Brenneranordnung (8) entlang einer Achse (A) erstreckt und die optische Sonde (11) entlang der Achse (A) angeordnet ist.

11. Anlage nach Anspruch 9 oder 10, wobei die Brenneranordnung (8) einen Hauptbrenner (25) und einen Zündbrenner (26), der im Inneren des Hauptbrenners (25) koaxial zu diesem angeordnet ist, umfasst, und wobei die optische Sonde (11) im Inneren des Zündbrenners (25) untergebracht ist und koaxial zum Hauptbrenner (25) und zum Zündbrenner (26) angeordnet ist.

12. Anlage nach einem der vorangehenden Ansprüche, wobei die optische Sonde (11) einen rohrförmigen Körper (50) mit einem optischen Fenster (51) an einem ersten Ende (50a) und einen Abschnitt eines Wellenleiters (15), der innerhalb des rohrförmigen Körpers (50) zwischen einem zweiten Ende (50b) des rohrförmigen Körpers (50) und dem optischen Fenster (51) untergebracht ist, aufweist.

13. Anlage nach Anspruch 12, bei der das optische Fenster in das Innere der Brennkammer (5) gerichtet ist.

14. Anlage nach Anspruch 12 oder 13, wobei der rohrförmige Körper (50) einen Lufteinlass (52) aufweist, der mit einem Luftzufuhrsystem (55) der Brenneranordnung (8) in Verbindung steht.

15. Verfahren zum Steuern einer Gasturbinenanlage mit einer Gasturbineneinheit (2), wobei das Verfahren umfasst:
Erfassen von Lichtintensitätsschwankungen innerhalb einer Brennkammer (5);
Erfassen von Druckschwankungen innerhalb der Brennkammer (5) ;
Identifizieren von Korrelationen zwischen den erfassten Lichtintensitätsschwankungen und den erfassten Druckschwankungen; und
Steuern der Gasturbineneinheit (2) entsprechend den erfassten Lichtintensitätsschwankungen;
**dadurch gekennzeichnet, dass** ein Erfassen von Zuständen thermoakustischer Instabilität das Erkennen von Zuständen thermoakustischer Instabilität innerhalb der Brennkammer (5) entsprechend den erfassten Korrelationen zwischen Lichtintensitätsschwankungen und Druckschwankungen umfasst.

16. Verfahren nach Anspruch 15, wobei die
Lichtintensitätsschwankungen selektiv in einem ersten Band (B₁), das die Wellenlänge von 308 nm enthält, und in einem zweiten Band (B₂), das die Wellenlänge von 430 nm enthält, erfasst werden.

## Revendications

1. Centrale à turbine à gaz, comprenant une unité turbine à gaz (2) et un système de commande (3), dans laquelle :
l'unité turbine à gaz (2) comprend une chambre de combustion (5) ; et
le système de commande (3) comprend un appareil de surveillance (9), doté d'au moins une sonde optique (11), et configuré pour détecter avec la sonde optique (11), des fluctuations de l'intensité lumineuse à l'intérieur de la chambre de combustion (5), et un contrôleur (10), configuré pour commander l'unité turbine à gaz (2) selon une réponse de l'appareil de surveillance (9) ;
dans laquelle l'appareil de surveillance (9) est configuré pour convertir les signaux d'intensité lumineuse en signaux de surveillance optiques (S_{OM}), et le contrôleur (10) est configuré pour fournir des signaux de commande (S_{C}) de l'unité turbine à gaz (2) selon les signaux de surveillance optiques (S_{OM}) fournis par l'appareil de surveillance (9) ;
dans laquelle le contrôleur (10) comprend un module de traitement (20), configuré pour détecter des états d'instabilité thermoacoustique à l'intérieur de la chambre de combustion (5) sur la base des signaux de surveillance optiques (S_{OM}) ;
dans laquelle l'appareil de surveillance (9) comprend des transducteurs piézoélectriques (17), couplés de manière fluidique à l'intérieur de la chambre de combustion (5), et configurés pour fournir des signaux de surveillance de la pression (S_{PM}) indicatifs de la pression à l'intérieur de la chambre de combustion (5) ;
et dans laquelle le module de traitement (20) est configuré pour identifier des corrélations entre des fluctuations de l'intensité lumineuse détectées par la sonde optique (11), et des fluctuations de la pression détectées par les transducteurs piézoélectriques (17) ;
**caractérisée en ce que** le contrôleur (10) est configuré pour fournir les signaux de commande (S_{C}) de l'unité turbine à gaz (2) selon les signaux de surveillance de la pression (S_{PM}), et de détecter des états d'instabilité thermoacoustique à l'intérieur de la chambre de combustion (5) selon les corrélations entre les fluctuations de l'intensité lumineuse et les fluctuations de la pression détectées.

2. Centrale selon la revendication 1, dans laquelle l'appareil de surveillance (9) est configuré pour détecter des fluctuations de l'intensité lumineuse de manière sélective dans une première bande (B₁), qui comprend la longueur d'onde de 308 nm, et dans une seconde bande (B₂), qui comprend la longueur d'onde de 430 nm.

3. Centrale selon la revendication 2, dans laquelle la première bande (B₁) et la seconde bande (B₂) sont distinctes.

4. Centrale selon la revendication 1, dans laquelle l'appareil de surveillance (9) est configuré pour détecter des fluctuations de l'intensité lumineuse dans un spectre de longueurs d'onde qui s'étend de la plage des infrarouges jusqu'à la plage des ultraviolets.

5. Centrale selon l'une quelconque des revendications 2 à 4, dans laquelle l'appareil de surveillance (9) comprend des transducteurs optoélectroniques (12) et des guides d'ondes (15) destinés à coupler optiquement la sonde optique (11) aux transducteurs optoélectroniques (12).

6. Centrale selon la revendication 5, dans laquelle l'appareil de surveillance (9) comprend des filtres optiques (14) agencés le long d'un chemin optique, entre la sonde optique (11) et les transducteurs optoélectroniques (12), et qui présentent des bandes passantes respectives qui coïncident avec la première bande (B₁) et avec la seconde bande (B₂).

7. Centrale selon la revendication 6, dans laquelle les filtres optiques (14) et les transducteurs optoélectroniques associés respectifs (12), définissent des canaux distincts qui acheminent des signaux se rapportant aux bandes de longueurs d'onde respectives.

8. Centrale selon l'une quelconque des revendications précédentes, dans laquelle le module de traitement (20) est configuré pour calculer le spectre des signaux de surveillance optiques (S_{OM}), et pour détecter des composantes d'amplitudes spectrales supérieures à un seuil (TH).

9. Centrale selon l'une quelconque des revendications précédentes, dans laquelle l'unité turbine à gaz (2) comprend au moins un ensemble brûleur (8), et la sonde optique (11) est logée à l'intérieur de l'ensemble brûleur (8).

10. Centrale selon la revendication 9, dans laquelle l'ensemble brûleur (8) s'étend le long d'un axe (A), et la sonde optique (11) est agencée le long de l'axe (A).

11. Centrale selon la revendication 9 ou 10, dans laquelle l'ensemble brûleur (8) comprend un brûleur principal (25) et un brûleur pilote (26) agencé à l'intérieur du brûleur principal (25), coaxial avec celui-ci, et dans laquelle la sonde optique (11) est logée à l'intérieur du brûleur pilote (25), et est coaxiale avec le brûleur principal (25) et avec le brûleur pilote (26).

12. Centrale selon l'une quelconque des revendications précédentes, dans laquelle la sonde optique (11) comprend un corps tubulaire (50), qui présente une fenêtre optique (51) à une première extrémité (50a), et une partie d'un guide d'ondes (15) logée à l'intérieur du corps tubulaire (50) entre la seconde extrémité (50b) du corps tubulaire (50) et la fenêtre optique (51).

13. Centrale selon la revendication 12, dans laquelle la fenêtre optique fait face à l'intérieur de la chambre de combustion (5).

14. Centrale selon la revendication 12 ou 13, dans laquelle le corps tubulaire (50) comprend une entrée d'air ((52) en communication avec un système d'approvisionnement en air (55) de l'ensemble brûleur (8).

15. Procédé de contrôle d'une centrale électrique à turbine à gaz comprenant une unité turbine à gaz (2), le procédé comprenant les étapes suivantes :
détecter des fluctuations de l'intensité lumineuse à l'intérieur d'une chambre de combustion (5) ;
détecter des fluctuations de la pression à l'intérieur de la chambre de combustion (5) ;
identifier des corrélations entre les fluctuations de l'intensité lumineuse détectées, et les fluctuations de pression détectées; et
commander l'unité turbine à gaz (2) selon les fluctuations de l'intensité lumineuse détectées ;
**caractérisé en ce que** la détection des états d'instabilité thermoacoustique comprend l'étape suivante :
reconnaître les états d'instabilité thermoacoustique à l'intérieur de la chambre de combustion (5) selon les corrélations détectées entre les fluctuations de l'intensité lumineuse et les fluctuations de la pression.

16. Procédé selon la revendication 15, dans lequel les fluctuations de l'intensité lumineuse sont détectées de manière sélective dans une première bande (B₁), qui comprend la longueur d'onde de 308 nm, et dans une seconde bande (B₂), qui comprend la longueur d'onde de 430 nm.
